Europäisches Patentamt

European Patent Office

Office européen des brevets

(11) Veröffentlichungsnummer: **0 039 005**
**B1**

(12) # EUROPÄISCHE PATENTSCHRIFT

(45) Veröffentlichungstag der Patentschrift :
15.08.84

(51) Int. Cl.³ : **A 47 J 27/09**

(21) Anmeldenummer : **81102916.4**

(22) Anmeldetag : **15.04.81**

(54) **Ventilanordnung für einen Dampfdruckkochtopf.**

(30) Priorität : **29.04.80 DE 3016504**

(43) Veröffentlichungstag der Anmeldung :
**04.11.81 Patentblatt 81/44**

(45) Bekanntmachung des Hinweises auf die Patenterteilung : **15.08.84 Patentblatt 84/33**

(84) Benannte Vertragsstaaten :
**AT CH DE FR GB IT LI NL SE**

(56) Entgegenhaltungen :
**DE-A- 2 510 808**
**DE-A- 2 606 676**
**DE-A- 2 611 713**
**DE-C-   931 800**
**FR-A-   639 192**
**US-A- 2 963 041**
**US-A- 3 827 596**

(73) Patentinhaber : **WÜRTTEMBERGISCHE METALLWA-
RENFABRIK AG.**
**Postfach 76**
**D-7340 Geislingen/Steige (DE)**

(72) Erfinder : **Krejza, Jürgen**
**Goethestrasse 8**
**D-7343 Kuchen (DE)**

(74) Vertreter : **Patentanwälte Grünecker, Dr. Kinkeldey,
Dr. Stockmair, Dr. Schumann, Jakob, Dr. Bezold,
Meister, Hilgers, Dr. Meyer-Plath**
**Maximilianstrasse 58**
**D-8000 München 22 (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung betrifft eine Ventilanordnung für einen Dampfdruckkochtopf entsprechend dem Oberbegriff des Anspruches 1.

Aus der DE-OS 2 606 676 ist eine derartige Ventilanordnung bekannt. Ihre Druckentlastungseinrichtung besteht aus einem Rückschlagventil, das auch als Sicherheitsventil dient. Es weist ein Ventilgehäuse aus elastischen Material auf, das in eine Ausnehmung des Deckels in der Nachbarschaft der Kochventil-Ausnehmung eingeklemmt ist. Der Verschlußkörper ist als schaftförmiger Ventilkörper ausgebildet, durchsetzt die Ventilöffnung und trägt innerhalb des Deckels im Abstand voneinander zwei Ventilteller und außerhalb des Deckels einen gewölbten Kopf. In drucklosem Zustand liegt der Kopf auf der Ventilöffnung. Bei Druckaufbau im Topf wird der Ventilkörper angehoben, und der obere Ventilteller verschließt die Ventilöffnung von innen, so daß sich der Druck im Kochtopf weiter aufbauen kann. Bei überhöhtem Druck kann sich der obere Ventilteller durch die Ventilöffnung des Ventilgehäuses nach außen bewegen. Dann kann Dampf durch die Ventilöffnung nach außen treten, wobei der zweite Ventilteller, ohne dieses Ausströmen zu behindern, das Wegfliegen des Ventilkörpers vehindert. Das Kochventil weist in üblicher Weise ein federbelastetes Ventil und eine darin, ebenfalls federbelastet, verschiebliche Druckanzeige für den Kochdruck auf, wobei sich die Federn im Inneren einer auf das Ventilgehäuse aufschraubbaren Haube abstützen. Bei der bekannten Ventilanordnung ist die Haube des Kochventiles an ihrer dem Deckel zugewandten Unterseite asymmetrisch ausgebildet. Sie weist dort in einem Bereich eine ihre lichte Höhe mindernde Führungsschräge auf. Bei normaler Kocheinstellung übergreift der Bereich mit der größten lichten Innenhöhe das Rückschlagventil. Beim Abschrauben der Haube gelangt der Bereich mit der niedrigen freien Höhe über das Rückschlagventil, über das er sich ungehindert hinwegbewegen kann, wenn bei völlig drucklosem Zustand der Kopf des Rückschlagventiles auf der Außenseite des Ventilsitzes anliegt. Bei durch Innendruck im Kochtopf angeschlossenem Rückschlagventil, d. h. wenn der obere Ventilteller am Ventilsitz anliegt, drückt die Führungsschräge den Ventilkörper des Rückschlagventils nach unten, und Dampf kann durch das Rückschlagventil austreten. Der Druck im Topf sinkt, während gleichzeitig die Bedienungsperson vor weiterem Abschrauben der Haube durch das Geräusch des ausströmenden Dampfes gewarnt wird. Bei infolge von geringem, beispielsweise sich aufbauendem, Druck im Topf, d. h. bei nur geringfügig angehobenem Ventilkörper, verhindert ein zusätzlich in die lichte Höhe ragender Anschlag das weitere Drehen der Haube.

Die bekannte Ventilanordnung ist aufwendig in ihrer Herstellung, da sie für die Druckentlastungseinrichtung ein Ventilgehäuse und einen Ventilkörper erfordert. Diese Teile sind aufwending in der Herstellung und der Montage. Die Haube des Kochventils ist durch ihre asymmetrische Form ebenfalls aufwendig in der Herstellung, wobei die Maße für die Schrägführung und den Bereich verminderter lichter Höhe in einem engen Toleranzbereich gehalten werden müssen : Einerseits muß der Ventilkörper zum Öffnen des Ventils nach unten gedrückt werden, andererseits darf dies nicht so weit geschehen, daß der Ventilkopf die Öffnung von außen verschließt. Ein weiterer Nachteil besteht darin, daß beim Drehen der Haube in Öffnungsstellung der Anschlag den Kopf des Ventilkörpers festklemmt und sich dieser auch bei drucklosem Topf nicht absenken kann, ehe die Haube nicht zunächst wieder etwas zurückgedreht wird. Beim Ansprechen des Rückschlagventiles als Sicherheitsventil kann sich der Ventilteller nicht mehr selbsttätig durch die Ventilöffnung zurückbewegen. Die Haube kann über den hoch herausragenden Ventilkörper hinweg nicht abgeschraubt werden, sie verhindert jedoch, daß der Ventilkörper zugänglich ist und wieder in die Normalstellung gebracht werden kann. Weiterhin ist es nachteilig, daß der Ventilkörper des Rückschlagventils einer gründlichen, für die dichte Anlage notwendigen Reinigung nur unterzogen werden kann, wenn er aus dem Ventilsitz herausgeknöpft wird. Wegen der umständlichen Handhabung unterbleibt diese Reinigung häufig.

Eine Ventilanordnung mit einer im Bereich des Kochventiles angeordneten Druckentlastungseinrichtung ist ferner aus dem DE-GBM 7 624 730 bekannt. Die Druckentlastungseinrichtung ist als Sicherheitsventil in Form eines Rückschlagventiles ausgebildet. Die Haube des Kochventiles weist an ihrem Umfang Einschnitte auf. Die beiden Ventile sind einander räumlich derart zugeordnet, daß nur bei bestimmten Haubenstellungen der Ventilkörper sich im Bereich einer solchen Einschlitzung anheben kann. Nur in dieser Stellung kann das Rückschlagventil schließen und sich im Topf ein Druck ausbilden. Bei angehobenem Ventilkörper, d. h. bei Druck im Topf, verregelt der Ventilkörper seinerseits die Haube des Kochventils, die nicht gedreht werden kann. Die Abblasöffnung ist damit nicht durch ein Verstellen der Haube zu öffnen. Diese bekannte Ventilanordnung, die somit nicht dem Oberbegriff der vorliegenden Erfindung entspricht, ist durch die Ausbildung des Rückschlagventils baulich aufwendig. Sie ist ferner schlecht zu reinigen, da der Dampf beim Ansprechen des Sicherheitsventiles durch einen Hohlraum des Kochventiles unter der haube seitlich abgeleitet wird, welche Hohlräume auch bei abgenommener Haube schwer zugänglich sind. Ferner muß nach Ansprechen des Sicherheitsventils und abgebautem Druck erst der Ventilkörper wieder in seine ursprüngliche Lage zurückgedrückt werden, ehe die Haube des Kochventils abgenommen werden kann.

Eine teilweise dem Gattungsbegriff entsprechende Ventilanordnung ist aus der FR-A 639 192 bekannt. Sie zeigt ein Ventil einer höhenverstellbaren Haube und eine im Bereich unter der Haube angeordneten Druckentlastungseinrichtung, die durch ein Verstellen der Haube zu öffnen ist. Die Ventilanordnung ist jedoch nicht für einen Dampfdruckkochtopf bestimmt sondern für die Druckluftzufuhr mittels einer Pumpe in einem Behälter für Brennstoffe, um darin einen bestimmten Überdruck aufzubauen. Dem entsprechend umfaßt die Ventilanordnung ein erstes Rückschlagventil, das mit einer Kugel arbeitet, und ein zweites Ventil, dessen Ventilkörper der Kugelkäfig ist. Dieses zweite Ventil öffnet, sobald durch die Druckluftzufuhr ein vorgegebener Höchstdruck im Behälter überschritten wird. Die zuviel zugeführte Druckluft strömt durch die Zufuhröffnung nach außen und signalisiert der Bedienungsperson, den Pumpvorgang zu beenden. Außerdem baut sie den überhöhten Druck wieder ab. Das äußere Ventilgehäuse, samt dem Anschlußkanal für die Pumpe, ist in einer zylinderförmigen, in die Deckelöffnung für das Ventil eingesetzten Halterung mittels einer auf diese aufschraubbaren Überwurfmutter gehaltert. Die Überwurfmutter liegt dabei an einem Ringflansch und der Oberseite der zylindrischen Halterung ist ein Dichtungsring eingelegt. Bei entsprechend tief aufgeschraubter Überwurfmutter drückt diese indirekt, nämlich über den Ringflansch des Ventilgehäuses, den Dichtungsring gegen einen Ringspalt zwischen der zylindrischen Halterung und dem Ventilgehäuse. Wird die Überwurfmutter nach oben geschraubt, kann das Ventilgehäuse unter dem Druck im Behälter sich um den gleichen Weg nach oben bewegen. Der Dichtungsring wird dadurch entlastet und Druckluft kann am Ventilgehäuse außen vorbei durch den Ringspalt in den Bereich unter der Überwurfmutter gelangen. Die Überwurfmutter weist ihrerseits Radialbohrungen in der Außenwand auf, durch die im genannten Fall eine Druckentlastung nach außen möglich ist. Obwohl auch in diesem Fall die Druckentlastung bewußt durch Lockern der Mutter vorgenommen wird, wenn der Behälter geöffnet werden soll, beispielsweise zum Nachfüllen des Brennstoffinhaltes, hat die gesamte Ventilanordnung mit dem Aufbau und der Wirkungsweise eines Kochventils nichts zu tun, weist auch keine eigene Abblasöffnung im Deckel zum Druckausgleich auf.

Aufgabe der vorliegenden Erfindung ist es, eine Ventilanordnung nach dem Oberbegriff zu schaffen, die wirtschaftlich herstellbar, einfach zu reinigen und in allen Betriebsfällen leicht zu handhaben ist.

Die Aufgabe wird erfindungsgemäß durch die kennzeichnenden Merkmale des Anspruches 1 gelöst.

Die Ausbildung des Verschlußkörpers als an der Haube befestigte Dichtung erlaubt es, die Abblasöffnung in Form einer einfachen Ausnehmung im Deckel auszubilden, ohne eigenes Ventilgehäuse. Eine derartige Ausnehmung ist in einem Arbeitsgang mit der Ausnehmung für das Kochventil herstellbar. Sie ist leicht zu reinigen. Die Anordnung der zugehörigen Dichtung in der Haube ermöglicht eine einfache, ebenfalls leicht zu reinigende Bauform. Diese Ausbildung der Druckentlastungseinrichtung wird möglich durch die Erkenntnis, daß die Abblasöffnung nur zur Druckentlastung offen sein muß. Vor dem Druckaufbau ist kein offenes Ventil erforderlich, da die sich erwärmende Luft über die üblichen Dichtungsringe zwischen Topf und Deckel entweichen kann, bis sich der Dichtungsring bei Druckaufbau an der Deckel- bzw. Topfwand dichtend anlegt. Der erfindungsgemäßen Druckentlastungseinrichtung erlaubt das Zusammenwirken von Dichtung und Abblasöffnung, einen Dampfaustritt schon bei kleiner Öffnungsbewegung der Haube, der Druck im Topf sinkt sofort. Ebenso wirkt die Druckentlastungseinrichtung dank des elastischen Materials der Dichtung auch ohne Bewegen der Haube bei zu hohem Druck, also als Sicherheitsventil. Ein weiterer Vorteil besteht darin, daß durch das Zusammenspiel der Abblasöffnung und der Dichtung ein Signalton erzeugt wird, der die Bedienungsperson auf den Überdruck aufmerksam macht, sei es durch ein selbsttätiges Dampfabblasen bei zu hohem Druck, oder bei einer Öffnungsbewegung der Haube. Bei Fehlen der Dichtung an der Haube kann sich im Topf überhaupt kein Druck ausbilden.

Bei einer bevorzugten Ausführungsform ist die Dichtung als auf dem inneren Bereich der Haube kraftschlüssig gehaltener Ring ausgebildet. Sie sitzt damit auf dem Haubenbereich verdreh- und verlustsicher. Zwischen der Haube und der ringförmigen Dichtung können sich nur schwer Verunreinigungen ansammeln, so daß die Dichtung nicht bei jeder Reinigung abgenommen werden muß. Ein Ausführungsbeispiel der Erfindung wird nachstehend anhand der Zeichnungen beschrieben. Es zeigen:

Figur 1 eine erfindungsgemäße Ventilanordnung im Querschnitt und

Figur 2 in Draufsicht.

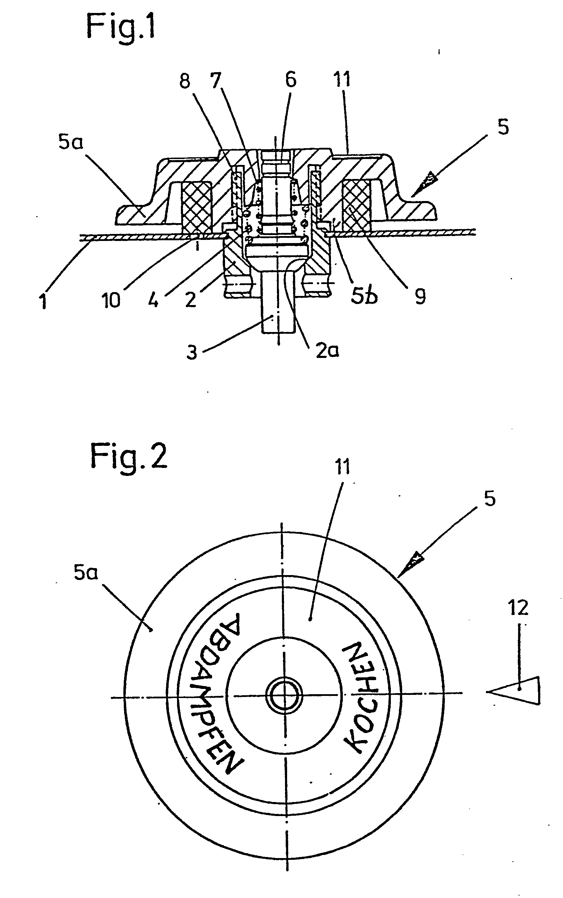

In Fig. 1 ist ein Deckel 1 eines Dampfdruckkochtopfes angedeutet. Ein Ventilgehäuse 2 ist in den Deckel 1 fest eingenietet. Es weist einen Ventilsitz 2a auf, auf den ein Ventilkörper 3 durch eine Ventilfeder 4 gedrückt wird. Die Ventilfeder 4 stützt sich an der Innenseite einer die gesamte Ventilanordnung übergreifenden Haube 5 ab, die als Hutmutter ausgebildet ist. Im Ventilkörper 3 ist ein Druckanzeiger 6 verschieblich geführt. Er ist durch eine Druckanzeigefeder 7 vorgespannt, die sich einerseits am Ventilkörper, andererseits ebenfalls an der Innenseite der Haube 5 abstützt. Die Haube 5 ist mittels eines Gewindes 8 auf das Ventilgehäuse aufschraubbar und bestimmt damit die Spannung der Ventil- und der Druckanzeigefeder.

Der die Mutter bildende zylindrische Innenteil 5b der Haube 5 ist von einer ringförmigen Dichtung 9 aus elastischem Material umgeben.

Dabei weist die ringförmige Dichtung einen Innendurchmesser auf, der sie mit Vorspannung auf der Mutter hält. Die Hutkrempe 5a der Haube erstreckt sich außerhalb der ringförmigen Dichtung.

Der Deckel 1 weist in einem Abstand von der Ventilachse, der zwischen dem Innen- und dem Außendurchmesser der ringförmigen Dichtung liegt, eine Ausnehmung 10 auf. Sie dient als Abblasöffnung und ist während des Kochvorganges von der ringförmigen Dichtung 9 verschlossen.

Fig. 2 zeigt die Haube 5 von oben. Sie trägt einen Beschriftungsring 11, der die Einstellung der Haube zu einer angedeuteten Markierung 12 auf dem nicht gezeichneten Deckel angibt.

Die geschilderte Ventilanordnung wirkt während eines Kochablaufes wie folgt : Die Haube 5 wird bis zum Anschlag aufgeschraubt, wobei sich die Aufschrift « Kochen » im Bereich der Markierung 12 befindet. In dieser Stellung sind die Ventilfeder und die Druckanzeigefeder vorgespannt. Die ringförmige Dichtung 9 schließt die Ausnehmung 10 ab. In bekannter Weise kann sich nun im Topf ein Dampfdruck ausbilden, nachdem die warme Luft, wie beschrieben, zwischen Topf und Deckel entwichen ist. Der Kochdruck wird durch Regeln der Wärmezufuhr abhängig von der Stellung des Druckanzeigers 6 gewählt. Am Ende des Kochvorganges wird die Haube 5 durch eine halbe Umdrehung in die Stellung « Abdampfen » gebracht. Dabei gibt die ringförmige Dichtung 9 die Ausnehmung 10 frei, der Dampf kann austreten, und der Druck wird abgebaut. Das Abdampfen erfolgt dabei stufenlos, abhängig von der Schnelligkeit der Drehung.

Wird während des Kochvorganges der Druckanzeiger nicht beachtet, d. h. die Wärmezufuhr nicht rechtzeitig gedrosselt, so daß der Druck im Topf zu hoch ansteigt, kann der Dampf durch die Ausnehmung 10 unter Verformung der ringförmigen Dichtung 9 austreten, wobei ein Signalton ertönt. Sollte die Dampfentwicklung trotzdem noch zu hoch sein, wird der Ventilkörper 3 von seinem Sitz 2a abgehoben.

## Ansprüche

1. Ventilanordnung für einen Dampfdruckkochtopf, mit einem Kochventil (2 bis 7), das eine höhenverstellbare Haube (5) aufweist, und mit einer im Bereich unter der Haube (5) angeordneten Druckentlastungseinrichtung (9, 10) mit einer während des Kochens durch einen Verschlußkörper (9) verschlossenen Abblasöffnung (10) im Deckel (1), die zur Druckentlastung durch ein Verstellen der Haube (5) zu öffnen ist, dadurch gekennzeichnet, daß als Versuchlußkörper an der dem Deckel (1) zugekehrten Haubenseite eine Dichtung aus elastischem Material so befestigt ist, daß sie in Kochstellung der Haube (5) durch diese dichtend gegen die Abblasöffnung (10) gepreßt wird, wobei die Dichtung (9) aus einem derart elastischem Material beshet und so dimensioniert ist, daß sie bei gegenüber dem normalen Kochdruck zu hohem Druck durch den Dampfdruck verformt wird und so selbsttätig den Dampfaustritt durch die Abblasöffnung (10) direkt aus dem Deckel (1) ermöglicht.

2. Ventilanordnung nach Anspruch 1, dadurch gekennzeichnet, daß die Dichtung (9) als auf dem inneren Haubenbereich (5b) der Haube (5) kraftschlüssig gehalterter Ring ausgebildet ist.

3. Ventilanordnung nach Anspruch 2, dadurch¹ gekennzeichnet, daß die ringförmige Dichtung (9) einen Innendurchmesser aufweist, der kleiner ist als der Außendurchmesser des von ihr umgebenen Haubenbereiches (5b).

4. Ventilanordnung nach wenigstens einem der Ansprüche 1 bis 4, dadurch gekennzeichnet, daß die Haube (5) als Hutmutter ausgebildet ist.

## Claims

1. Valve arrangement for a steam-pressure cooking pot, with a cooking valve (2 to 7) which has a vertically adjustable hood (5), and with a pressure relief device (9, 10) located in the region underneath the hood (5) and having a blow-off orifice (10) which is closed during cooking by means of a closing body (9) and is located in the lid (1) and which can be opened for pressure relief by adjusting the hood (5), characterised in that a gasket made of resilient material is fastened as a closing body to the hood side facing the lid (1), in such a way that, in the cooking position of the hood (5), it is pressed sealingly by the latter against the blow-off orifice (10), the gasket (9) consisting of such a resilient material and having such dimensions that, at a pressure which is too high in relation to the normal cooking pressure, it is deformed by the steam pressure and thus automatically allows steam to escape directly from the lid (1) through the blow-off orifice (10).

2. Valve arrangement according to Claim 1, characterised in that the gasket (9) is designed as a ring retained non-positively on the inner hood region (5b) of the hood (5).

3. Valve arrangement according to Claim 2, characterised in that the annular gasket (9) has an inside diameter which is less than the outside diameter of the hood region (5b) surrounded by it.

4. Valve arrangement according to at least one of Claims 1 to 4, characterised in that the hood (5) is designed as a cap nut.

## Revendications

1. Dispositif de valve pour un autocuiseur qui comprend une valve de cuisson (2 à 7) comportant un capot réglable en hauteur (5), et dans une région située sous le capot (5), un dispositif de décompression (9, 10) pourvu, dans le couvercle (1), d'un orifice de ventilation (10) fermé, pendant la cuisson, par un obturateur (9), et qui peut être ouvert pour lacher la pression en déplaçant le capot (5), caractérisé en ce que ledit obturateur est constitué par un joint en une matière élastique fixé sur la face du capot tournée vers le couvercle (1), de sorte que lorsque ledit capot (5) est en position de cuisson, il est pressé de manière étanche contre l'orifice de ventilation (10), le joint (9) étant constitué en une matière élastique telle et étant dimensionné de telle manière que lorsque la pression de cuisson devient anormalement élevée, cette pression le déforme et, ainsi, permet automatiquement à la vapeur de s'échapper par l'orifice de ventilation (10) du couvercle (1).

2. Dispositif de valve selon la revendication 1, caractérisé en ce que le joint (9) est constitué d'une bague tenue positivement sur la région intérieure (5b) du capot (5).

3. Dispositif de valve selon la revendication 2, caractérisé en ce que le joint annulaire (9) a un diamètre intérieur qui est plus petit que le diamètre extérieur de la région (5b) du capot qu'il entoure.

4. Dispositif de valve selon l'une, au moins, des revendications 1 à 4, caractérisé en ce que le capot (5) présente la forme d'un écrou-chapeau.

# Fig.1

# Fig.2